# EUROPEAN PATENT SPECIFICATION

(11) **EP 0 883 225 B1**
(45) Date of publication and mention of the grant of the patent: **08.09.2010**
(21) Application number: 97303736.9
(22) Date of filing: 02.06.1997
(51) Int. Cl.: H02J 9/06, H02J 7/14

(54) **System for automatic supervision of storage battery charge in an engine driven standby power unit**
Vorrichtung zur automatischen Überwachung einer Speicherbatterieladung in einer maschinenangetriebenen unterbrechungsfreien Stromversorgung
Système de surveillance automatique de la charge d'une batterie de réserve dans une alimentation non interruptible, actionnée par une machine

(43) Date of publication of application: 09.12.1998
(73) Proprietor: Yang, Tai Her, Si-Hu Town, Dzan Hwa (TW)
(72) Inventor: Yang, Tai Her, Si-Hu Town, Dzan Hwa (TW)
(74) Representative: Wright, Howard Hugh Burnby

(56) References cited:
- EP-A- 0 698 522
- GB-A- 938 418
- GB-A- 2 164 433
- US-A- 4 203 041
- US-A- 5 355 075
- US-A- 5 532 525
- WINDHORN A: "A HYBRID STATIC/ROTARY UPS SYSTEM" IEEE TRANSACTIONS ON INDUSTRY APPLICATIONS, vol. 28, no. 3, 1 May 1992, pages 541-545, XP000306102

## Description

### SUMMARY OF THE INVENTION

The subject System of Automatic Surveillant Revolving Storage Battery Auxiliary Charge provides essentially an auxiliary power supply furnished with engine Dynamo for Battery Power System, to provide various forms of auxiliary charging and power supply, so as to upgrade power supply capabilities on an uninterrupted mode under a variety of charging conditions.

An electric power source as defined in the preamble of claim 1 is known from EP-A- 0698522.

### BRIEF DESCRIPTION OF THE DRAWINGS

Fig. 1 is a block diagram of the Invention System;

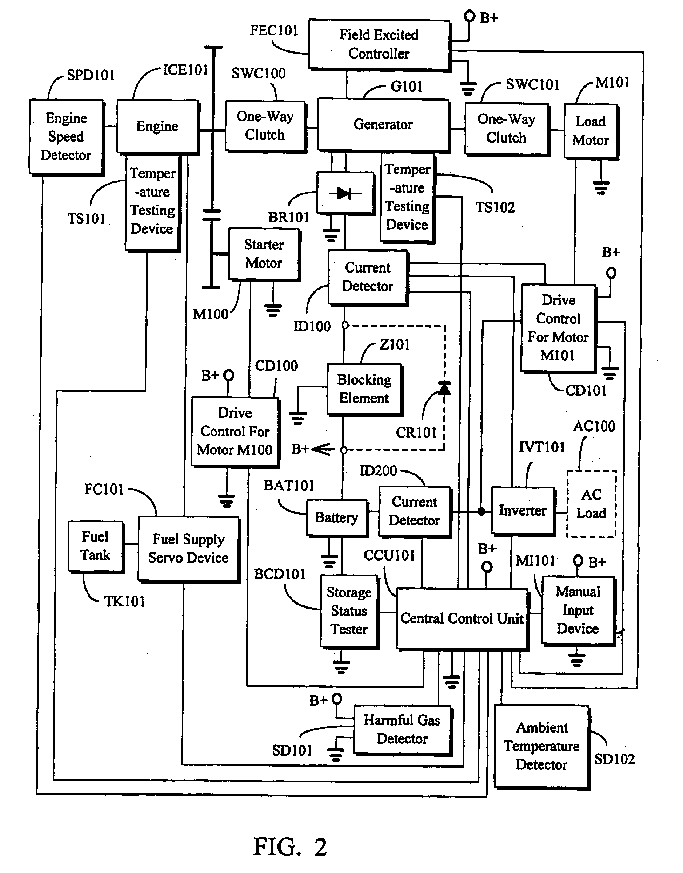

Fig. 2 is a block diagram of the Invention System illustrated with a blocking diode CR 101 and blocking element Z 101 both provided to control Battery Potential and Power as generated;
Fig. 3 is a block diagram showing, as incorporated in the Invention System, a blocking diode CR 101 and operable two-way switch SSW 101, meant to control battery potential and Power as generated;

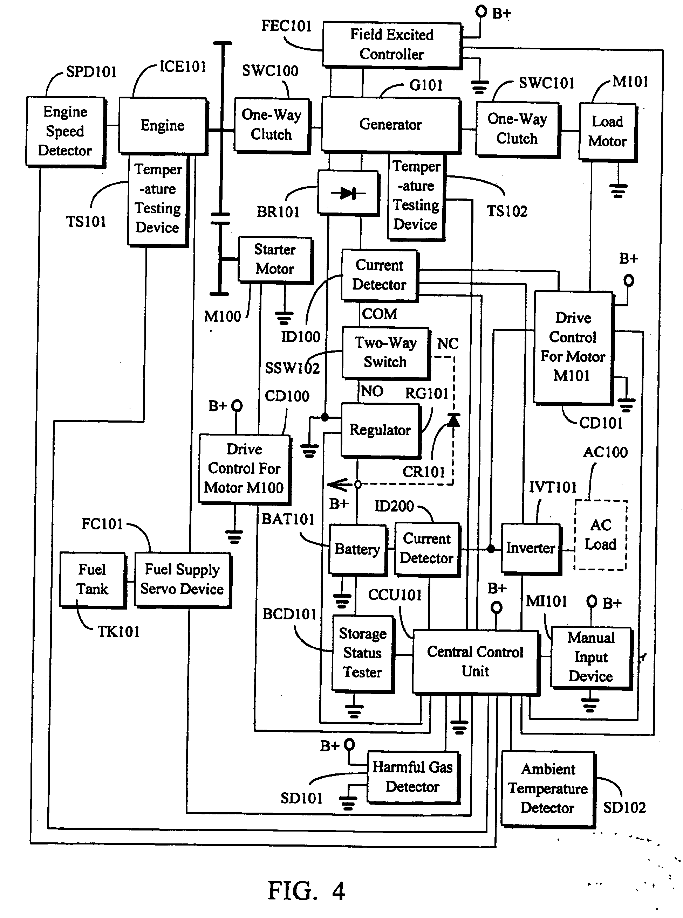

Fig. 4 is a block diagram showing, as incorporated in the Invention System, blocking diode CR 101 and Regulator RG 101 meant to control point C Contact Switch SSW102, and eventually to control Battery Potential and power by generation.

### DETAILED DESCRIPTION OF THE INVENTION

By and large owing to its portability and volumetric density utility features, storage batteries are largely used in emergency power systems and power driven transporters, the pity, however, is that to serve longer term loading requirements and enlarge battery capacities, increase in costs and overall weights are inevitably incurred, in addition, battery serviceable life can also be undermined due to exposure to more profound discharging tasks under heavy load conditions; with the subject System Charging Source of Automatic Surveillant Revolving Storage Battery Auxiliary Charge is derived from Engine Dynamo to render auxiliary charging where needed to stationary or carrier-laden batteries so as to keep them in adequately stored condition at all times ready for all eventualities.

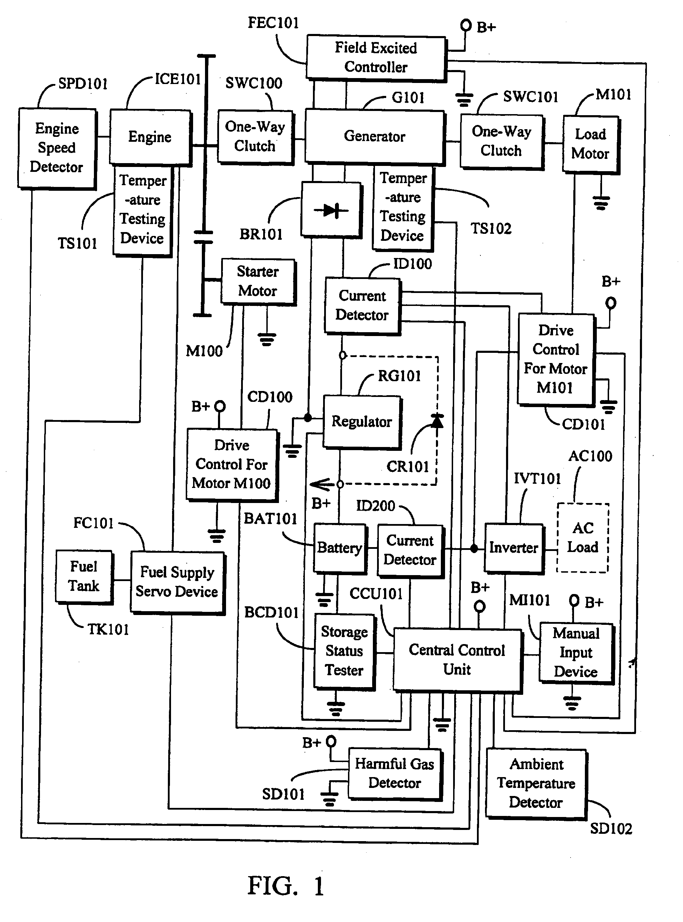

Referring to Fig. 1, a block diagram of the Invention System, it is seen that the subject System of Automatic Surveillant Revolving Storage Battery Auxiliary Charge is composed essentially of:
--Battery BAT 101 : which is basically a secondary Battery capable of repeated charging/discharging recycling operation, which can be , for example, a battery of the plumbous acid, nickel/cadmium, nickel/nitrogen, or nickel/zinc structure or else of the lithium system, or still of the zinc system or otherwise secondary battery system;
--Storage Status Tester BCD 101: which is provided to conduct continuous or periodical testing or else to convert to digital or analogue power signal output for comparisons using relevant charging or discharging, or static loading errors followed by a correction process, and comprises mechanic or solid state electronic elements which form analogue testing circuits, or alternatively digital testing circuits consisting of microprocessors and relevant software, interfacing electronic elements, or else a combination of both executions;
--Regulator RG 101: composed of mechanic or solid state electronic elements, optional contingent on system requirements, which, by referencing output voltage/current from Generator G 101, or alternatively receiving instructions coming from Central Control Unit CCU 101, feeds back output power to the Prime Generator G 101;
--Current Detector ID 100: connected in series to the output terminal of Generator G 101, with current sampling means comprising resistive or conductive elements or else magnetic field sensors, or still means of the heat cumulation or electromagnetic effect type capable of yielding current testing values to be converted into analogue signals with which to produce an output current for the Generator G 101 being tested or input current under specific conditions, by which to control, regulate the Regulator RG 101, or else to be fed to CCU 101, so as to control in turn the operation condition of Generator G 101, which is also an optional choice;
--Current Detector ID 200: seriesly connected between

input/output terminals of Battery BAT 101 and the Transmission Control CD 101 or Rectifier IVT 101; with current sampling means comprising purely resistive element or conductive element or a combination of both, or else elements may be sensed, tested by the strength of magnetic fields, or else composed of devices capable of producing analoguy signals by the measured currents of the heat cumulation type or magnetic effect testing type, meant to test the output or input current of the Battery to be tested, then fed to the Drive Control CD 101 or CCU 101, so as to control in suit the output power BAT 101, which is also an optional choice;
--Engine Set ICE 101: Revolving or Reciprocating Internal Combustion Engine using gasoline or Diesel oil or gas or other fluid fuel for conversion into dynamic power for output purpose;
--Generator G 101: comprising armatured or unarmatured mechanism, D.C. or A.C., to convert the incoming Engine Revolving Power into A.C. or D.C. power, or in the case of A.C. power, to convert same through rectification at rectifier B 101 into D.C. output to drive load motor M 101 and to charge the Batteries;
--Rectifier BR 101: to convert by rectifying single phase or multiple phase A.C. power into D.C. Power in dealing with A.C. Dynamos, an optional choice depending upon system requirements;
--Field excited Control FEC 101: composed of mechanic or solid state elements, to control the power outcoming from A. C. or D.C. Generator comprising field Excited Windings, basing on Generator Output Status and the Manual Control Device MI 101 and CCU 101 settings, so as to achieve in regulatory control of voltage, current or power rate, this feature to be saved where the Generator Pole is of a permanent magnet type;
--Engine Speed Detector SPD 101: analoguy or digital in execution, capable or converting angular displacements into correspondent electric signals in electromagnetic or photoelectric forms so as to feed engine speed signals to CCU 101, and consequently regulate the feed of fuel way from Servomechanism FC 101 to Engine Set, while signal value of this device can also be substituted by the analogous voltage or frequency value as the case may be; this Engine Speed Detector SPD 101 can also be made to consist of mechanical structure, such as, for example, Centrifugal Testing Structure or otherwise mechanical structure, and made in mechanical interaction with fuel supply Servomechanism FC 101 so as to bring Engine Set ICE 101 into fixed speed rotation, both executions disclosed hereinbefore are to be adopted depending on the nature of the system involved, and the device on top of that, is an optional choice contingent on system requirements;
--Tansmission Motor M 100: compsed of an electric structure synchronous or asynchronous, A.C. or D.C., armatured or unarmatured, to receive input power so as to produce revolving power to initiate in turn the Engine Set ICE 101;
--Fuel Supply Servo Device FC 101: to receive electric power servo instructions or alternatively mechanic interaction, structured so as to control the fuel supply to Engine Set ICE 101, and that in turn to regulate rotation speed and torsion on the part of Engine Set ICE 101, both executions optionable contingent on system makeup;
--Fuel Tank TK 101: where engine fuel is stored, to control fuel supplied to Engine Set ICE 101 by means of Fuel Line and Fuel Supply Servo Device FC 101 interconnected therebetween;
--Drive Control CD 100: composed essentially of Mechanical or solid state power elements and associated ckts., to drive Startup Motor into operation or else to stop its operation;
--Drive Control CD 101: composed of mechanical or solid state elements and relevant ckts, to control the Load Motor M 101 for forward/reverse rotation, speed regulation, startup and stop functioning, in respect of which the quantity to be supplied is contingent on system requirements;
--Load Motor M 101: composed of A.C. or D.C., armatured or inarmatured, synchronous or asynchronous Motor, realizing forward rotation, reverse rotation, speed regulation, operation, and stopping and such like functions so as to transmit a load, the Load Motor M 101 may also be made to consist of other loads in respect of which the quantity of installation is dictated by system requirements;
--Auxiliary Power Supply B+ : with power sourced to Battery BAT 101 in the system, or with an additionally provided Battery Set serving as the Auxiliary Power Supply or as derived from Dynamo Generation, and that in an effort to offer power supply to the Central Control Unit CCU 101, or Manual Control Unit MI 101, or the Drive Control CD 101 to Load Motor M 101, or else to Harmful Gas Detector SD 101, or Drive Control CD 101 to Startup Motor M 100, or to Field Excitied Control EFC 101, or still Regulator RG 101, or still else such as lighting facilities for functioning, where Auxiliary Battery is provided, the Generator may be additionally furnished with

correspondent Generation Windings to facilitate charging of the auxiliary battery;
--D.C. to A.C. Invertor IVT 101: composed of solid state power rate elements and associated circuits, to convert D.C. power into A.C. power so as to enpower A.C. loads, in respect of which the guantity to be supplied is contingent on system requirements;
--Central Control Unit CCU 101: composed of mechanical or solid state elements which form alternatively analoguy or digital structure or a combined structure of both executions;
   or still else of microprocessor comprising operation and control softwares , D-A converter, A-D converter or other relevant ckt elements, with internal operation modes set with instructions coming from Manual Control Device MI 101 or feedback signals so as to govern interactions between Generator G 101, Battery BAT 101, Load Motor M 101 or other loads in the control system, as well as other associated devices for a regulated operation;
--Manual Control Device MI 101: composed singly of mechanic or solid state elements in analogy mode or digital mode as separate from or else composite with each other, for feeding to the Central Control Unit so as to control the overall system operation , in respect of which the quantity to be installed is dependent on system requirements;
--Harmful Gas Detector SD 101: provided to detect the concentration of harmful gases, if any, in the surrounding environments when the charging is in progress, made to the Engine, whether in Manual Control Mode or in Automatic Mode of activation, and the operation will be stopped where the concentration as detected exceeds a safety margin, but allowed for continued operation where the reading detected falls within tolerance, in respect of which the quantity for installation is dictated by system requirements;
--Ambient Temp. Detector SD 102: composed-of temp. sensors, plus mechanic or solid state components, intended for automatic detection of ambient temperatures, and with the equivalent electric power signal detected transmitted to CCU 101, so that charging may be suspended, other forms of operation stopped when the ambient temp. thus identified exceeds a given threshold value, whereas continued system operation is allowed where the ambient temp. is found to be within rated working temp. ranges; in respect of which the quantity to be supplied is dependent on system requirements, and the provision, on top of that, is an optional choice.

The invention titled System of Automatic Surveillant Revolving Storage Battery Auxiliary Charge is essentially designed to maintain Storage Battery in adequately charged condition by using Engine Dynamo as its power supply, so as to offer timely auxiliary charging to transmit a Load Motor or otherwise loads, or still to stationary or carrier-laden batteries. In operation, testing measurement is made, basing on manual control modes, or else on Central Control Unit programmed for the purpose, considering battery storage condition, with respect to the battery and with the testing signals thus obtained compared with aforementioned control or programmed value, to effect commensurate controlled operation of Engine Driven Generator Set, incorporating optionally various functions including any or all of the following:
(1) the ability to charge and initiate motor and engine, Generator exclusively by charging the Battery when, against testing of the Battery Saturation State, the Battery storage is confirmed to have fallen down to preset level;
(2) the ability to deliver power to the Load Motor or other loads and Storage Battery, basing on the result of testing of Storage Battery Saturation State signal, by striking a comparison of the modes of operation programmed in the Central Control Unit, followed with outputting of rated or ratable power or else of fixed current or controlled current by correspondent control of the Generator whereby loading factor is matched or through proportionate apportioning of currents supplied to both, with it being made possible to switch automatically to function (3) described hereinafter where the load aggravated accordinlgly has exceeded Generator's generation factor, but switching back to prime operation regime when the load factor drops to a level below the Generator Generation power factor;
(3) te ability to effect relative control of the Generator for fixed current or controlled current output, or else for fixed power factor, or controlled power factor output, basing on the current storage condition of the storage battery, so as to apportion, in a controlled manner, the Generator and the Battery in observance of generator power factor and loading factor or both currents, so that Generator and Storage Battery will jointly drive the Load Motor or other loads, and eventually switch to function (2) described hereinbefore where the load has reduced with the loading factor downgraded to a level below the Generator power factor, but reverting to Prime Function running in operation where the Load Factor reaches a level that is greater than the Generator Generation Factor;
(4) the ability to verify load current status of the Load Motor when driven by the Battery alone, such that once the power factor of the Load Motor or other rises to a level beyong the set value or beyond the set time, engine and generator are automatically driven to operation meanwhile the modus operandi programmed in the Central Control Unit will function to bring about operation under fixed current, or controlled current, or fixed power rate, or controlled power rate, in an effort to drive the load jointly with the Storage Battery, moreover, operation of Engine Dynamo will be stopped, followed by continued supply of power from Storage Battery to the Load Motor or other Load once Load Motor or other Load power factor resumes normal rating beyond a predetermined time;
(5) the ability to drive engine and generator duly in response to manipultion of Manual Control so that Generator with its output may singly drive the Load Motor or other Load, and that once load charged upon the Load Motor escalates potential stored in the Battery may jointly drive the load with Generator produced potential, and further that, once Motor Load resumes normal, Battery will stop outputting power so that the load is driven instead by power coming from Engine Dynamo;
(6) the ability to accept manipulation from the Manual Control Unit so as to initiate Engine and Dynamo for fixed current, controlled current, or else fixed power rate, or control led power rate generation, so as to drive Load Motor and charge storage battery in a manner proportional to the matched generation power rate and load rate or alternatively to current in both cases just as matched too, with it being made possible to switch automatically to function mode (7) once the load is aggravated to a level beyong Generator generation power rate, but reverting to prime functional running once the load factor turns to a level inferior to the same generation power rate;
(7) the ability to accept manipulation from the Manual Control Unit so as to initiate Engine and Dynamo for fixed current, controlled current, or else fixed power rate, or controlled power rate generation, so as to charge Dynamo and Battery to jointly drive the Load Motor or other Load pursuant to generation power, loading pwoer, or current in both cases in proportionate distribution, also that the operation will turn to function under function (6) when the load is reduced and the loading power is less than the generation power, but revert to prime function mode when the load power exceeds the generation power rate;
(8) the ability to accept manipulation from Manual Control Unit so as to initiate Engine and Dynamo to individually charge with respect to the Battery;
(9) the ability to accept manipulation from Manual Control Unit so as to initiate Engine and Dynamo to individually program charging times to limit charging currents to the Battery, power factor to the Battery, and to trigger suspension of charging to Engine Dynamo, control of charging time in this connection includes supplemental charging of saturation charging, or emergency charging, as partially applied charging, to the Battery;
(10) the provision to stop operation of Engine Dynamo set as the Battery reaches predetermined saturation, as determined in the course of operation under aforementioned function (1), (8), or (9) ;
(11) the provision to stop charging with respect to the Battery without affecting power being output from Engine Dynamo to Load Motor through manupilation either of Manual Control Unit or Else of Central Control Unit once the Battery reaches a predetermined saturation point, verified in the course of operation run under function (2) or (6) hereinbefore;
(12) the provision to stop operation of Engine Dynamo so that power output be delivered to Load Motor way from the Battery through manipulation either of Manual Control Unit or else of Central Control Unit once the Battery reaches a predetermined saturation point, verified in the course of operation run under function (2) or (6) hereinbefore;
(13) the provision for the Engine Dynamo to continue operation concurrently with the Battery shifting from a charging status to jointly deliver input power with Dynamo to the Load Motor through manipulation either or Manual Control Unit or else of Central Control Unit once the Battery reaches a predetermined saturation point, verified in the course of operation run under function (2) or (6) hereinbefore;
(14) the provision to relatively regulate Generator's generation power rate basing on the charging current signal incoming as a result of the testing conducted when the Generator solely charges the Battery or concurrently delivers power to the Load Motor while charging the Battery at the same time, in a course of operation under function (1), (2), (6), (8), (9) hereinbefore;
(15) Surveillance of peripheral harmful gases: to test the concentration of peripheral harmful gases, so that, once a critical value is exceeded charging will be stopped,other functional operation stopped forthwith, and restarting be made once the reading shall have dropped to a level below the critical one, the testing being conducted when charging is run under automatic or manual transmission, or alternatively other functional operation is in progrees, by means of a Harmful Gas Detector;
(16) Surveillance of ambient temp. : by monitoring of ambient temp. detector, to stop charging or other operation when the temp. exceeds a predetermined value while allowing other modes of operation within nomral temp.range, but such that Engine and Generator be transmitted automatically when the temp. dorps too low or in a shutdown status, so as to maintain a sustaining charging for the Battery so that the latter is maintained in ready to serve condition in all eventualities.

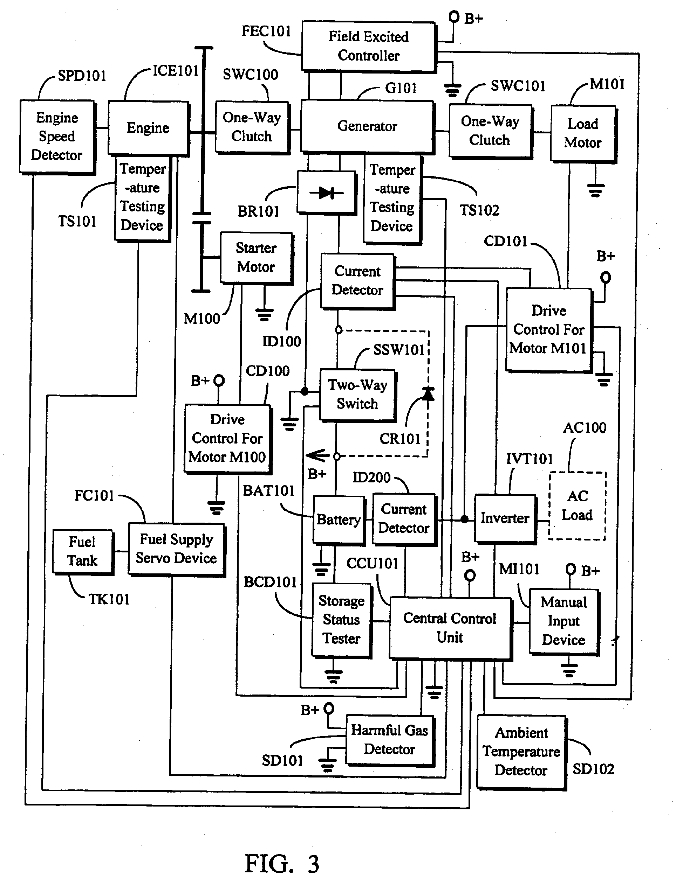

When the subject System of Automatic Surveillant Revolving Storage Battery Auxiliary Charge is running under function (2) or (6), with output power of Generator G 101 in parallel with Battery BAT 101 straight, disparity in Battery Saturation status will have the effect such that Generator, G 101 forms a surge charging with respect to Battery BAT 101 when the Battery is at a relatively lower capacity level, it is then time to operate by means of the following control ckts comprising:
--the arrangement for a forward series blocking diode CR 101 to be connected to the output terminal of BAT 101, which is set parallel with the D.C. Output terminal outgoing from the D.C, or A.C. rectification of Generator G 101, across both ends of diode CR 101 is parallelled a Regulator RG 101, so that RG 101 is made active to regulate power that is charged way from Generator to the Battery; RG 101 may be further adapted to be receptor to control signals emitted from CCU 101 basing on the test outcome from Battery Storage Detector BCD 101 so as to allow for regulation of charging rates or currents, and for control of startup or stopping of charging functions as well;
--the arrangement for a blocking diode CR 101 connected in forward series to BAT 101, to thence form a parallel output with the D.C. output terminal following a D.C. or A.C. rectification of Generator G 101, such as is illustrated in Fig. 1;
--the arraggement for a blocking diode CR 101 to be serially forward-connected to the output terminal of BAT 101, to thence form a parallelled output with the D.C. output terminal resultant from the D.C. or A.C. rectification of Generator G 101, with a resistive or conductive or composite resistive/conductive impedance Z 101 put in parallel connection across both ends of the blocking diode (see Fig. 20) in lieu of the proper functioning or Regulator RG 101 to restrict the charging of currents way from the Generator to the Battery:
--the connection in forward series sense of a blocking diode CR 101 at the output end of BAT 101, to form a parallel output across the D.C. output end following D.C. or A.C. rectification of Generator G 101, while both ends of blocking diode CR 101 may be further(see Fig. 3) parallelled with a mechanic or solid state controllable two-way switch SSW 101 to permit an open ckt or close ckt alteration control across the output terminals of both BAT 101 and Generator G 101 in lieu of the proper functioning of Regulator RG 101, that in turn to allow control of the charging status way from Genertor G 101 to BAT 101, and of the output status of BAT 101 to Load Motor M 101;
--the arrangement for the block diode CR 101 connected in forward series sense to the output end of BAT 101, and the output end of a series diode CR 101 in forward connection to BAT 101, by way of which D.C. power is supplied from Generator G 101 that is governed by Regulator RG 101, or alternatively an impedance element Z 101 bearing the same function or else a controllable two-way switch SSW 101, to be of the same polairty altogether, while that end coming from the power terminal of Generator, connected to the output end of a Common contact (COM) diode CR 101 in common with SSW 102 in command of point C may, as dictated by ckt, requirement , be severally connected to the NO point and NC point of the SSW 102 in command of point C, or alternatively a reversal of such a connection is granted so as to render possible control by Generator G 101 of the outpout status of the charging status of Battery, and that of the Battery to the Load Motor M 101 or other load; In addition, in the subject System of Automatic Surveillant Revolving Storage Battery Auxiliary Charge, factors including the engine sets for the transmission of Generators having to maintain in operation in various ambient temp. conditions, that the engines having, as a rule, to be warmed up prior to routine operation, all the more so in winter times, that heat accumulated during operation having to be radiated, have obliged this system to operation under CCU condition or Manual mode of operation including:
--the restriction for Generator to yield output after Engine has been initiated for some time, that is, generator output is necessarily lagging behind engine initiation;
--while the system is running continuously in operation, the Engine Set must be maintained at idle running warmup condition when no output of power comes from the Generator, so as to get prepared for output operation;
--while the entire system stops operation, the Engine Generator must continue in heat dissipation running so as to prevent accumulation of heat in the Engine, and upon completion of heat dissipation running, stop running altogether;
--While the system runs in operation, Engine Generator must be subjected to control effected from Temp. Testing Device TS 101 located in the Engine or that Temp. Testing Device TS 102 located in the Generator, so that engine rotation is stopped when the temp. is found to exceed a predetermined level, or alternatively is made to yield lesser power output;
--while the system is running in operation, when due to manipulation of Manual Control or CCU automatic control, Engine is set to a preparatory status or System comes to a prepare-to-stop condition, the Engine Set will be driven to intermittent operation, basing on the engine temp. that is predetermined in the CCU, so as to maintain a preparatory state advantageous to temp. initiation;
--Engine Kinetics as related to Engine Generator Set, more than just for transmission of Generator, may serve to transmit cooling or heating temp. regulator of the pump type and driven by mechanic energy or else other peripheral devices transmittable by revolving mechanic drives which may at the same time, as dictated by requirements, be selectively equiped with electric motor drive devices, and to be driven by engine kinetics capable of transmitting cultches or incorporating one-way clutches;
--provision of a one-way transmission clutch SWC 100 way between Engine Set ICE 101 and Generator G 101, with one-way transmission clutch SWC 101 installed in-between Generator G 101 and Load Motor M 101 output end or the Load, with the load, while exerting inertial idle running in one direction, capable of driving Generator G101, so that Generator G 101 is made possible to realize braking action owing to recycled generation while the one-way transmission clutch SWC 100 is idle running; when Engine Set ICE 101 drives Generator G 101 to operation, one-way transmission clutch SWC 101 will be idle running; said one-way transmission clutch may very well be replaced with artificial or mechanical or power driven or fluid powered clutching devices or come as a version of combination thereof, while clutch in a disengaged status is equivalent to a one-way clutch in an idle running status, whereas clutch in a closure state amounts to a one-way clutch in a disengaged state.

By way of the subject System of Automatic Surveillant Revolving Storage Battery Auxiliary Charge described in the foregoing it is made possible to put the Storage Battery in a power storage condition that is better and more desirable than what is possible ever before todate, serving not only to go in favor of loading system operation, but also to avoid over-discharging the Storage Battery, thus achieving eventually the ultimate goal of prolonging service life of the Battery Assembly at the large.

## Claims

1. An electric power source for supplying electric power to a load, comprising:
a storage battery (BAT101) capable of repeated charging/discharging recycling operations;
a storage status tester (BCD101) arranged to test for charging, discharging, or static loading errors during the repeated charging/discharging recycling operations;
an internal combustion engine (ICE101);
a load motor (M101) capable of forwards rotation, reverse rotation, speed regulation, and stopping functions;
a generator (G101) arranged to convert power from the engine (ICE101) into electrical power to drive the load motor (M101) and/or to charge the storage battery (BAT101);
a current detector (ID100) connected in series to an output terminal of the generator;
a current detector (ID200) connected in series to an output terminal of the storage battery (BAT101);
a field excited control (FEC101) arranged to regulate the electrical power from the generator (G101);
a fuel supply servomechanism (FC101) arranged to control the fuel supply to the engine, and thereby regulate engine rotation speed and torque;
a starter motor (M100) arranged to generate rotational power to start the engine;
a starter motor drive controller (CD100) arranged to drive the starter motor;
a load motor drive controller (CD 101) arranged to drive the load motor;
a central control unit (CCU101) connected to the engine, the generator, the storage battery, the load motor, or other loads in the control system and arranged to respond to instructions from the manual control device and to feedback signals so as to govern interactions between the generator, the storage battery, the load motor, or other loads in the control system;
an engine speed detector (SPD101) arranged to convert angular displacement of the engine into engine speed signal which are fed to the central control unit (CCU101), and thereby regulate the supply of fuel from the fuel supply servomechanism to the engine;
a manual control device (MI101) for feeding the central control unit so as to control the overall system operation;
an auxiliary power supply (B+) arranged to supply power to the central control unit, the manual control device, and the drive controllers;
a harmful gas detector (SPD101) arranged to detect the concentration of harmful gases, in a surrounding environment when charging is in progress, with its output transmitted to the central control unit; and an ambient temperature detector (SD 102) arranged for automatically detecting ambient temperatures, with its output transmitted to the central control unit;
wherein, when the load motor (M101) is driven by the storage battery (BAT101) alone, the central control unit (CCU101) is arranged such that, if the load on the load motor (M101) increases such that the electric power driving the load motor (M101) exceeds a threshold value and a set time, it will operate to start the engine (ICE101) driving the generator (G101) to provide electric power to the load motor (M101) jointly with the storage battery (BAT101);
**characterised in that:**
the electric power source further comprises a field excited control (FEC101) arranged to regulate the electrical power from the generator (G101);
wherein the central control unit (CCU101) stops operation of the engine, whether in manual control mode or in automatic mode of activation, whenever the detected concentration of harmful gases exceeds a safety margin, but is allowed to continue when a reading from the harmful gas detector falls within a predetermined tolerance:
wherein the central control unit (CCU101) suspends charging, and stops other forms of operation, when the ambient temperature exceeds a given threshold value, and so that continued system operation is allowed where the ambient temperature is found to be within a predetermined working temperature range; and
wherein, the central control unit (CCU101) is further arranged such that, if the load on the load motor (M101) increases such that the electric power driving the load motor (M101) exceeds the threshold value and a set time, it will operate to start the engine (ICE101) driving the generator (G101) to provide electric power to the load motor and will operate to stop the engine (ICE101) once the output power of the load motor (M101) resumes normal rating beyond a predetermined time.

2. An electric power source as claimed in claim 1, wherein the battery (BAT101) is a lead acid, a nickel/cadmium, a nickel/nitrogen, a nickel/zinc or a lithium battery.

3. An electric power source as claimed in claim 1 or claim 2, wherein the output of the battery (BAT101) is fed to the storage status tester (BCD101) and then to the central control unit (CCU101) so as to control the output power of the battery.

4. An electric power source as claimed in any one of claims 1 to 3, wherein the storage status tester (BCD101) is provided to conduct continuous or periodic testing, or to convert the battery output to a digital or an analogue power signal output for comparison during charging or discharging.

5. An electric power source as claimed in any one of claims 1 to 4, wherein the storage status tester (BCD101) is a mechanical or solid state electronic device which forms a analogue testing circuit or a digital testing circuit consisting of a microprocessor and relevant software, interfacing electronic elements, or a combination of both.

6. An electric power source as claimed in any one of claims 1 to 5, wherein the generator (G101) comprises a armatured or unarmatured mechanism for converting incoming engine revolutions into A.C. or D.C. power.

7. An electric power source as claimed in claim 6, further comprising a rectifier (BR101) to convert A.C. power into D.C. output to drive the load motor (M101) and to charge the battery (BAT101).

8. An electric power source as claimed in claim 7, wherein the rectifier (BR101) rectifies single phase or multiple phase A.C. power into D.C. power.

9. An electric power source as claimed in any one of claims 1 to 8, further comprising a regulator (RG101).

10. An electric power source as claimed in claim 9, wherein the regulator (rag101) references the output voltage/current from the generator (G101), or receives instructions from the central control unit (CCU101) thereby to feed back output power to the generator.

11. An electric power source as claimed in claim 10, wherein the current detector (ID100) is connected between the regulator (RG101) and the generator (G101), the current detector yielding current testing values to be converted into analogue signals with which to produce an output current for the generator, thereby to control the regulator or to feed the output of the current detector to the central control unit (CCU101), so as to control in turn the operation condition of the generator.

12. An electric power source as claimed in any one of claims 1 to 11, wherein the field excitied control (FEC101) is arranged to control the output power of the generator (G101) based on the generator output status and the settings of the manual control device (MI101) or the central control unit (CCU101), thereby regulating the voltage, current or power rate of the generator.

13. An electric power source as claimed in any one of claims 1 to 12, wherein the engine speed detector (SPD101) is such as to convert angular displacements into corresponding electric signals so as to feed engine speed signals to the central control unit (CCU101), and consequently to regulate the feed of fuel from the fuel supply servomechanism (FC101) to the engine (ICE101).

14. An electric power source as claimed in claim 13, wherein the engine speed detector (SPD101) and the servomechanism (FC 101) are such as to bring the engine (ICE 101) into a fixed speed of rotation.

15. An electric power source as claimed in any one of claims 1 to 14, wherein the engine (ICE101) is a reciprocating internal combustion engine.

16. An electric power source as claimed in any one of claims 1 to 15, wherein the load motor (M101) is a synchronous or asynchronous, A.C. or D.C. motor.

17. An electric power source as claimed in any one of the preceding claims, wherein the servomechanism (FC101) controls the flow of fuel from a fuel tank (TK101) to the engine (ICE101).

18. An electric power source as claimed in any one of claims 1 to 17, further comprising a control circuit having blocking diode (CR101) connected to the output , terminal of the battery (BAT101).

19. An electric power source as claimed in claim 18 when appendent to claim 9, wherein the diode (CR101) is parallelled with the regulator (RG101), so that as the regulator is activated to regulate power supplied by the generator (G101) to the battery (BAT101), the regulator is further adapted to receive control signals from the central control unit (CCU101) based on the test outcome from a battery storage detector (BCD101) so as to allow for regulation of charging rates or currents, and for control of startup or stopping of charging functions.

20. An electric power source as claimed in claim 18 or claim 19, further comprising a resistive, conductive or composite resistive/conductive impedance (Z101) in parallel across the blocking diode (CR101) to restrict the charging of currents from the generator (G101) to the battery (BAT101).

21. An electric power circuit as claimed in claim 18 or claim 19, further comprising a two-way switch (SSW101) in parallel with the blocking diode (CR101) to permit an open circuit or a close circuit control across the output terminals of both the battery (BAT101) and the generator (G101), thereby allowing control of the charging status from the generator to the battery, and of the output status of the battery to the load motor (M101).

22. An electric power source as claimed in any one of claims 1 to 21, wherein the arrangement is such that, when the entire system stops operation, the generator (G101) continues in heat dissipation running, so as to prevent accumulation of heat in the engine (ICE101), and upon completion of heat dissipation running, the generator stops running.

23. An electric power source as claimed in any one of claims 1 to 22, wherein the central control unit (CCU101) or the manual control device (MI101) is such that, while the system is in operation, the generator (G101) is subjected to control from a temperature testing device (TS101) located in the engine (ICE101) or in the generator, so that engine rotation is stopped when the temperature exceeds a predetermined level, or is made to provide a lesser power output.

24. An electric power source as claimed in any one of claims 1 to 23, wherein the central control unit (CCU101) or the manual control device (MI100) is such that, while the system is in operation, manipulation of the manual control device or the central control unit sets the engine (ICE101) to a preparatory status, or the system comes to a prepare-to-stop condition, and the engine is driven to intermittent operation based on the engine temperature that is predetermined in the central control unit so as to maintain a preparatory state advantageous to temperature initiation.

25. An electric power source as claimed in any one of claims 1 to 24, further comprising one-way transmission clutches (SWC100, SWC101) arranged such that, while exerting inertial idle running in one direction capable of driving the generator (G101), the generator can apply a braking action owing to recycled generation while the one-way transmission clutch (SWC100) is idle running; and, when the engine (ICE101) drives the generator to operation, the one-way transmission clutch (SWC101) will be idle running.

26. An electric power source as claimed in claim 25, wherein each of the transmission one-way clutches (SWC100, SWC101) is a clutching device driven by an artificial, a mechanical, an electrical, a fluid or a magnetic force.

27. An electric power source as claimed in any one of claims 1 to 26, wherein the arrangement is such that:
(1) it charges and initiates motor and engine operation, and charges the battery (BAT101) exclusively through the generator when, by testing the battery saturation state, the battery storage is confirmed to have fallen down to a preset level;
(2) it delivers power to the load motor (M101) or other loads and to the battery (BAT101), based on the result of testing the battery saturation state signal, and comparing it with the modes of operation programmed in the central control unit (CCU101), followed by output of rated or ratable power, or of fixed current or controlled current, by correspondent control of the generator so that the loading factor is matched, or through proportionate apportioning of currents supplied to both the load and the battery, and further switching automatically to effect relative control of the generator when the aggregate load has exceeded the generators capacity, while switching back to the prime operating regime when the load factor drops to a level below the generator capacity;
(3) to effect relative control of the generator for a fixed current or controlled current output, for a fixed power factor, or a controlled power factor output, based on the current storage condition of the battery, so as to apportion loads, in a controlled manner, to the generator and the battery based on the generator power factor and loading factor, or on both currents, so that the generator and the battery will jointly drive the load motor or other loads, and eventually switch to the function (2) when the load has reduced with the loading factor downgraded to a level below the generator power factor, but reverting to its prime function when the load power consumption reaches a level that is greater than the generator capacity.
(4) to verify the load current status of the load motor when driven by the battery alone, such that, once the power factor of the load motor or other load rises to a level beyond a set value or beyond a set time, the engine and the generator are automatically driven, and the modes of operation programmed in the central control unit function to bring about operation under a fixed or controlled current, or fixed or controlled power rate, in order to drive the load jointly with the battery, the operation of generator also being stopped, followed by continued supply of power from the battery to the load motor or other load, once the load motor or other load power factor resumes a normal rating after the set time has elapsed;
(5) to drive the engine and the generator in response to manipulation of manual control device (MI101) so that the generator with its output may singly drive the load motor or other load, and so that when the load charged on the load motor increases, the power stored in the battery may jointly drive the load with the generator produced power, and further so that, once the motor load returns to normal, the battery will stop outputting power at which time the load is driven instead by power coming from the generator;
(6) to accept manipulation from the manual control device so as to initiate engine and generator operation for a fixed or controlled current, or a fixed power rate, to control power rate generation, so as to drive the load motor and charge the battery in a manner proportional to the matched generation power rate and the load rate, or to match the current supplied in both cases;
(7) to accept manipulation from the manual control device so as to initiate engine and generator operation for fixed current, controlled current, or a fixed power rate, or a controlled power rate generation, so as to cause the generator and the battery jointly to drive the load motor or other load based on generated power, loading power, or current with proportional distribution, to return operation to charge the battery when the load is reduced and the loading power is less than the generation power, and to revert its prime function mode when the load power exceeds the generation power rate;
(8) to accept manipulation the from manual control device so as to initiate engine and generator operation to charge the battery selectively;
(9) to accept manipulation from the manual control device so as to initiate engine and generator operation to charge the battery for individually programmed charging times, to limit charging currents to the battery, the power factor to the battery, and to trigger suspension of charging by the generator, with control of charging time in this connection including supplemental or saturation charging, or emergency charging;
(10) to stop operation of the engine and the generator as the battery reaches predetermined saturation, as determined in the course of operation under aforementioned functions (1), (8), or (9);
(11) to stop charging with respect to the battery without affecting power being output from the generator to the load motor through either manipulation of the manual control device or by the central control unit once the battery reaches a predetermined saturation point, verified in the course of operation run under functions (2) or (6);
(12) to stop operation of the generator so that the power output is delivered to the load motor from the battery through manipulation either of the manual control device or the central control unit once the battery reaches a predetermined saturation point, verified in the course of operations run under functions (2) or (6);
(13) to enable the generator to continue operation concurrently with the battery by shifting from a charging status jointly to deliver input power with the generator to the load motor either through manipulation of the manual control device or by means of the central control unit once the battery reaches a predetermined saturation point, verified in the course of operations run under functions (2) or (6);
(14) to regulate the generator's power generation rate based on a charging current signal generated as a result of testing conducted when the generator solely charges the battery or concurrently delivers power to the load motor while charging the battery at the same time, during operations under functions (1), (2), (6), (8), or (9);
(15) surveilling peripheral harmful gases by testing the concentration of peripheral harmful gases so that, once a critical value is exceeded, charging and other functional operations will be stopped, and only restarted once the reading of harmful gases has dropped to a level below the critical one, the testing being conducted when charging is run under automatic or manual transmission, or alternatively other functional operations are in progress, by means of the harmful gas detector;
(16) surveilling ambient temperature, with the output of the ambient temperature detector being used to stop charging or other operations when the temperature exceeds a predetermined value, while allowing other modes of operation within the normal temperature range, and by causing the engine and the generator to be shifted automatically to a shutdown status when the temperature drops too low, so as to maintain a sustaining charge for the battery such that the battery is maintained in readiness in all eventualities.

28. An electric power source as claimed in any one of claims 1 to 27, wherein the generator (G101) is arranged to provide an electrical output only after a predetermined time has elapsed following starting of the engine (ICE101).

29. An electric power source as claimed in any one of claims 1 to 28, wherein the arrangement is such that, when it has been running continuously, the engine (ICE101) is maintained in a warmed-up condition by running the engine at idle speed in preparation for generator operation.

30. An electric power source as claimed in any one of claims 1 to 29, wherein the arrangement is such that, when it stops power generation completely, peripheral cooling devices continue to perform heat dissipation to avoid engine heat accumulation; and, upon completion of heat dissipation, engine operation is automatically stopped.

31. An electric power source as claimed in any one of claims 1 to 30, wherein the arrangement is such that, during operation, the engine (ICE101) and the generator (G101) are controlled by the ambient temperature detector (SD102) to reduce power output if the temperature exceeds a predetermined limit.

32. An electric power source as claimed in any one of claims 1 to 31, wherein the engine (ICE101) is arranged to be intermittently operated to maintain a temperature set by the central control unit (CCU101).

33. An electric power source as claimed in any one of claims 1 to 32, wherein the manual control device (MI101) is arranged to enable programming of charging times, maximum charging currents, and charging current power factor.

## Patentansprüche

1. Elektrische Energiequelle zur Versorgung einer Last mit elektrischer Energie, umfassend:
eine Speicherbatterie (BAT101), die in wiederholten Recyclingvorgängen geladenlentladen werden kann;
einen Speicherstatustester (BCD101), der zum Prüfen des Ladens,
Entladens oder von statischen Lastfehlern während der wiederholten Recyclingvorgänge ausgebildet ist;
eine Brennkraftmaschine (!CE101);
einen Lastmotor (M101), der für eine Vorwärtsdrehung, Rückwärtsdrehung, Geschwindigkeitsregelung und für Stoppfunktionen ausgelegt ist;
einen Generator (G101), der ausgebildet ist für die Umwandlung der Leistung des Motors (ICE101) in elektrische Energie für den Antrieb des Lastmotors (M101) und/oder zum Laden der Speicherbatterie (BAT101);
einen Stromdetektor (ID100), der mit einem Ausgangsanschluss des Generators in Reihe geschaltet ist;
einen Stromdetektor (ID200), der mit einem Ausgangsanschluss der Speicherbatterie (BAT101) in Reihe geschaltet ist;
eine felderregte Steuerung (FEC101), die für die Regelung der elektrischen Energie von dem Generator ausgebildet ist;
einen Kraftstoffzufuhr-Servomechanismus (FG101), der für die Steuerung der Kraftstoffzufuhr zu dem Motor ausgebildet ist und **dadurch** die Drehzahl und das Drehmoment des Motors regelt;
einen Startermotor (M100), der für die Erzeugung einer Drehkraft zum Starten des Motors ausgebildet ist;
einen Startermotor-Drive Controller (CD100), der für den Antrieb des Startermotors ausgebildet ist;
einen Lastmotor-Drive Controller (CD101), der für den Antrieb des Lastmotors ausgebildet ist;
eine zentrale Steuereinheit (CCU101), die an den Motor, den Generator,
die Speicherbatterie, den Lastmotor oder sonstige Lasten in dem Steuersystem angeschlossen und für die Reaktion auf Instruktionen von der manuellen Steuereinrichtung und auf Feedback-Signale ausgebildet ist, um Interaktionen zwischen dem Generator, der Speicherbatterie, dem Lastmonitor oder sonstigen Lasten in dem Steuersystem zu verhalten;
einen Motordrehzahl-Detektor (SPD101), der für die Umwandlung der Winkelbewegung des Motors in ein Motordrehzahisignal ausgebildet ist,
das zur zentralen Steuereinheit (CCU101) geleitet wird, um dadurch die Zufuhr von Kraftstoff aus dem Kraftstoffzufuhr-Servomechanismus zu dem Motor zu regeln;
eine manuelle Steuereinrichtung (MI101) für die Speisung der zentralen Steuereinheit, um den Betrieb des Gesamtsystems zu steuern;
eine Hilfsenergiequelle (B+), die für die für Stromzufuhr zur zentralen Steuereinheit , manuellen Steuervorrichtung und zu den Antriebsreglern ausgebildet ist;
einen Schadgas-Detektor (SD101), der für die Erfassung der Schadgaskonzentration in einer Umgebung während des Ladens ausgebildet ist, wobei seine Ausgabe an die zentrale Steuereinheit geleitet wird; und
einen Umgebungstemperatur-Detektor (SD102), der für die automatische Erfassung von Umgebungstemperaturen ausgebildet ist, wobei seine Ausgabe an die zentrale Steuereinheit geleitet wird;
wobei, wenn der Lastmotor (M101) durch die Speicherbatterie (BAT101) alleine angetrieben wird, die zentrale Steuereinheit (CCU101) derart ausgelegt ist, dass sie, wenn die Last an dem Lastmotor (M101) so ansteigt, dass die den Lastmotor (M101) antreibende elektrische Energie zu einer eingestellten Zeit einen Schwellenwert übersteigt, den Motor (ICE101) startet, der den Generator (G101) antreibt, um den Lastmotor (M101) gemeinsam mit der Speicherbatterie (BAT101) mit elektrischer Energie zu versorgen;
**dadurch gekennzeichnet, dass**
die elektrische Energiequelle ferner eine felderregte Steuerung (FEC101) umfasst, die für die Regelung der elektrischen Energie von dem Generator (G101) ausgebildet ist;
wobei die zentrale Steuereinheit (CCU101) ungeachtet dessen, ob der Motor sich in dem manuellen Steuermodus oder in dem automatischen Aktivierungsmodus befindet, den Betrieb des Motors immer dann stoppt,
wenn die nachgewiesene Konzentration schädlicher Gase eine Sicherheitsgrenze überschreitet, wohingegen der Motor seinen Betrieb fortsetzen kann, wenn ein Ablesewert des Schadgasdetektors in einen vorgegebenen Toleranzbereich fällt:
wobei, die zentrale Steuereinheit (CCU101) das Laden aussetzt und weitere Betriebsarten stoppt, wenn die Umgebungstemperatur einen gegebenen Schwellenwert übersteigt, und die Fortsetzung des Systembetriebs zulässt, wenn festgestellt wird, dass die Umgebungstemperatur innerhalb einer vorgegebenen Betriebstemperatur liegt; und
wobei die zentrale Steuereinheit (CCU101) ferner dafür ausgebildet ist, dass sie, wenn die Last an dem Lastmotor (M101) derart ansteigt, dass die den Lastmotor (M101) antreibende elektrische Energie zu einer eingestellten Zeit den Schwellenwert übersteigt, den Motor (ICE101) startet, der den Generator (G101) antreibt, um den Lastmotor mit elektrischer Energie zu versorgen, und den Motor (ICE101) stoppt, sobald die Ausgangsleistung des Lastmotors (M101) über eine vorgegebene Zeit hinaus wieder die normal bemessene Leistung erbringt.

2. Elektrische Energiequelle nach Anspruch 1, wobei die Batterie (BAT101) eine Blei-Säure-, Nickel/Cadmium-, Nickel/Stickstoff-, Nickel/Zink- oder eine Lithium-Batterie ist.

3. Elektrische Energiequelle nach Anspruch 1 oder 2, wobei die Leistung der Batterie (BAT101) in den Speicherstatus-Prüfer (BCD101) eingegeben und dann der zentralen Steuereinheit (CCU101) zugeleitet wird, um die Ausgangsleistung der Batterie zu steuern.

4. Elektrische Energiequelle nach einem der Ansprüche 1 bis 3, wobei der Speicherstatus-Prüfer (BCD101) vorgesehen ist, um fortlaufend eine periodische Prüfung vorzunehmen oder um die Batterieleistung in ein digitales oder analoges Leistungssignal umzuwandeln, das für einen Vergleich während des Ladens oder Entladens ausgegeben wird.

5. Elektrische Energiequelle nach einem der Ansprüche 1 bis 4, wobei der Speicherstatus-Prüfer (BCD101) eine mechanische oder eine Festkörper-Elektronikvorrichtung ist, die eine analoge Prüfschaltung oder eine digitale Prüfschaltung bildet, die aus einem Mikroprozessor und relevanter Software, elektronischen Schnittstellenelementen oder einer Kombination aus beidem besteht.

6. Elektrische Energiequelle nach einem der Ansprüche 1 bis 5, wobei der Generator (G101) einen Mechanismus mit Anker oder ohne Anker für die Umwandlung der eingehenden Motorumdrehungen in Wechselstrom- oder Gieichstromenergie.

7. Elektrische Stromquelle nach Anspruch 6, ferner umfassend einen Gleichrichter (BR101) zur Umwandlung von Wechselstrom in eine Gleichstromausgabe, um den Lastmotor (M101) anzutreiben und die Batterie (BAT101) zu laden.

8. Elektrische Energiequelle nach Anspruch 7, wobei der Gleichrichter (BR101) Einphasen- oder Mehrphasen-Wechseistromenergie in Gleichstromenergie moduliert.

9. Elektrische Energiequelle nach einem der Ansprüche 1 bis 8, ferner umfassend einen Regler (RG101).

10. Elektrische Energiequelle nach Anspruch 9, wobei der Regler (RG101) die Ausgangsspannung/den Ausgangsstrom von dem Generator (G101) referenziert oder Instruktionen von der zentralen Steuereinheit (CCU101) empfängt, um dadurch die Ausgangsleistung an den Generator rückzumelden.

11. Elektrische Energiequelle nach Anspruch 10, wobei der Stromdetektor (ID100) zwischen den Regler (RG101) und den Generator (G101) geschaltet ist, der Stromdetektor Stromprüfwerte abgibt, die in analoge Signale umzuwandeln sind, um mit diesen einen Ausgangsstrom für den Generator zu erzeugen und dadurch den Regler zu steuern oder um die Ausgabe des Stromdetektors zur zentralen Steuereinheit (CCU101) zu leiten, um wiederum die Betriebsbedingungen des Generators zu steuern.

12. Elektrische Energiequelle nach einem der Ansprüche 1 bis 11, wobei die felderregte Steuerung (FEC101) ausgebildet ist für die Steuerung der Ausgangsleistung des Generators (G101) basierend auf dem Generatorausgangsstatus und den Einstellungen der manuellen Steuervorrichtung (MI101) oder der zentralen Steuereinheit (CCU1101), wodurch die Spannung , der Strom oder die Leistungsrate des Generators geregelt werden.

13. Elektrische Energiequelle nach einem der Ansprüche 1 bis 12, wobei der Motordrehzahl-Detektor (SPD101) dergestalt ist, dass Winkelbewegungen in entsprechende elektrische Signale umgewandelt werden, um Motordrehzahlsignale zur zentralen Steuereinheit (CCU101) zu leiten und in der Folge die Zufuhr von Kraftstoff von dem Kraftstoffzufuhr-Servomechanismus (FC101) zu dem Motor zu regeln.

14. Elektrische Energiequelle nach Anspruch 13, wobei der Motordrehzahl-Detektor (SPD101) und der Servomechanismus (FC101) dergestalt sind, dass der Motor (ICE101) auf eine feste Drehgeschwindigkeit gebracht wird.

15. Elektrische Energiequelle nach einem der Ansprüche 1 bis 14, wobei der Motor (ICE101) eine sich hin und her bewegende Brennkraftmaschine ist.

16. Elektrische Energiequelle nach einem der Ansprüche 1 bis 15, wobei der Lastmotor (M101) ein synchroner oder asynchroner Wechselstrom- oder Gleichstrommotor ist.

17. Elektrische Energiequelle nach einem der vorhergehenden Ansprüche, wobei der Servomechanismus (FC101) den Kraftstofffluss von einem Kraftstoffbehälter (TK101) zu dem Motor (ICE101) steuert.

18. Elektrische Energiequelle nach einem der Ansprüche 1 bis 17, ferner umfassend eine Steuerschaltung mit einer Sperrdiode (CR101), die mit dem Ausgangsanschluss der Batterie (BAT101) verbunden ist.

19. Elektrische Energiequelle nach Anspruch 18, wenn zu Anspruch 9 zugehörig, wobei die Diode (CR101) mit dem Regler (RG101) parallelgeschaltet ist, so dass der Regler bei Aktivierung zur Regelung der durch den Generator (G101) zur Batterie (BAT101) gelieferten Energie ferner angepasst ist für den Empfang von Steuersignalen von der Zentraleinheit (CCU101) basierend auf dem Prüfausgang von dem Batteriespeicher-Detektor (BCD101), um die Regelung von Laderaten oder Ladeströmen und die Steuerung der Inbetriebsetzung und des Stoppens von Ladefunktionen zu ermöglichen.

20. Elektrische Energiequelle nach Anspruch 18 oder Anspruch 19, ferner umfassend eine resistive, konduktive oder kombiniert resistive/konduktive Impedanz (Z101), die parallel über die Sperrdiode (CR101) geschaltet ist, um das Laden der Ströme von dem Generator (G101) in die Batterie (BAT101) einzuschranken.

21. Elektrische Energiequelle nach Anspruch 18 oder Anspruch 19, ferner umfassend einen Zweiwegeschalter (SSW101) parallel mit der Sperrdiode (CR101), um eine Steuerung bei offenem Stromkreis oder bei geschlossenem Stromkreis über den Ausgangsanschlüssen sowohl der Batterie (BAT101) als auch des Generators (G101) zuzulassen und dadurch eine Steuerung des Status des Ladens von dem Generator in die Batterie und des Status der Ausgabe der Batterie in den Lastmotor (M101) zu ermöglichen.

22. Elektrische Energiequelle nach einem der Ansprüche 1 bis 21, wobei die Anordnung derart ist, dass bei Stoppen des Gesamtsystems der Generator (G101) im Betrieb unter Wärmeableitung weiterläuft, um eine Wärmeanstau in dem Motor (ICE101) zu verhindern, und nach Ende des Betriebs unter Wärmeableitung stoppt.

23. Elektrische Energiequelle nach einem der Ansprüche 1 bis 22, wobei die zentrale Steuereinheit (CCU101) oder die manuelle Steuervorrichtung (MI101) derart ist, dass während des Betriebs des Systems der Generator (G101) einer Steuerung durch eine sich in dem Motor (ICE101) oder in dem Generator befindenden Temperaturprüfvorrichtung (TS101) unterliegt, so dass die Motordrehung gestoppt wird, wenn die Temperatur eine vorgegebene Höhe übersteigt, oder veranlasst wird, für eine geringere Leistungsabgabe zu sorgen.

24. Elektrische Energiequelle nach einem der Ansprüche 1 bis 23, wobei die zentrale Steuereinheit (CCU101) oder die manuelle Steuervorrichtung (MI100) derart ist, dass während des Betriebs des Systems die Betätigung der manuellen Steuervorrichtung oder der zentralen Steuereinheit den Motor (ICE101) in einen Vorbereitungszustand versetzt oder das System in einen Zustand für die Vorbereitung eines Stopps (prepare-to-stop) gelangt und der Motor basierend auf der Motortemperatur, die in der zentralen Steuereinheit vorgegeben ist, für einen diskontinuierlichen Betrieb angetrieben wird, um den für die Temperatur-Initüerung vorteilhaften Vorbereitungszustand beizubehalten.

25. Elektrische Energiequelle nach einem der Ansprüche 1 bis 24, ferner umfassend Einweg-Übertragungskupplungen (SWC100, SWC101), die derart ausgebildet sind, dass sie während der Ausübung eines Trägheitsleerlaufs in einer Richtung den Generator (G101) antreiben können, dass der Generator aufgrund von Rekuperation eine Bremswirkung ausüben kann, während die Einweg-Übertragungskupplung (SWC101) im Leerlauf ist, und dass die Einweg-Übertragungskupplung (SWC101) im Leerlauf ist, wenn der Motor (ICE101) den Generator für den Betrieb antreibt.

26. Elektrische Energiequelle nach Anspruch 25, wobei jede der Übertragungs-Einwegkuppiungen (SWC100, SWC101) eine Kupplungsvorrichtung ist, die durch eine künstliche, eine mechanische, eine elektrische, eine Fluid- oder eine Magnetkraft angetrieben wird.

27. Elektrische Energiequelle nach einem der Ansprüche 1 bis 26, wobei die Anordnung derart ist,
(1) dass sie lädt und den Motor- und Maschinenbetrieb initiiert und dass sie die Batterie (BAT101) ausschließlich durch den Generator lädt, wenn bei der Prüfung des Sättigungszustands der Batterie bestätigt wird, dass dieser unter eine voreingestellte Höhe gesunken ist;
(2) dass sie Energie an den Lastmotor (M101) oder sonstige Lasten und an die Batterie (BAT101) liefert, basierend auf dem Ergebnis der Überprüfung des Batteriesättigungszustands-Signals und dieses mit den in der zentralen Steuereinheit (CCU101) programmierten Betriebsmoden vergleicht, gefolgt von einer Ausgabe der schätzbaren Leistung oder eines festen Stroms oder gesteuerten Stroms durch eine korrespondierende Steuerung des Generators, so dass der Lastfaktor angepasst wird, oder durch anteiliges Zuteilen von Strömen, die sowohl der Last als auch der Batterie zugeführt werden, und dass sie ferner automatisch umschaltet, um eine relative Steuerung des Generators zu bewirken, wenn die Aggregatlast die Kapazität des Generators überschritten hat, während auf das Hauptantriebssystem zurückgeschaltet wird, wenn der Lastfaktor auf eine Höhe unterhalb der Generatorkapazität abfällt;
(3) dass die relative Steuerung des Generators bewirkt wird für eine feste oder gesteuerte Stromausgabe, für eine feste Leistungsfaktor- oder eine gesteuerte Leistungsfaktorausgabe, basierend auf dem Stromspeicherzustand der Batterie, um dem Generator und der Batterie basierend auf dem Leistungsfaktor des Generators und dem Lastfaktor in gesteuerter Weise Lasten zuzuteilen, oder basierend auf beiden Strömen, so dass der Generator und die Batterie den Lastmotor oder sonstige Lasten gemeinsam antreiben, und um schlief3lich auf die Funktion (2) umzuschalten, wenn sich die Last verringert hat und der Lastfaktor auf eine Höhe unterhalb des Leistungsfaktors des Generators zurückgestuft wurde, um aber die Antriebsfunktion wieder aufzunehmen, wenn der Energieverbrauch der Last eine Höhe erreicht, die größter ist als die Kapazität des Generators;
(4) dass der Laststromstatus des Lastmotors verifiziert wird, wenn der Antrieb durch die Batterie alleine erfolgt, so dass, sobald der Leistungsfaktor des Lastmotors oder sonstiger Lasten auf eine Höhe oberhalb eines Einstellwerts oder oberhalb einer eingestellten Zeit ansteigt, der Motor und der Generator automatisch angetrieben werden und die in der zentralen Steuereinheit programmierten Betriebsmoden arbeiten, um einen Betrieb unter einem festen oder einem gesteuerten Strom oder einer festen oder gesteuerten Leistungsrate herbeizuführen, um die Last gemeinsam mit der Batterie anzutreiben, wobei der Betrieb des Generators auch gestoppt wird, gefolgt von einer fortgesetzten Energiezufuhr von der Batterie zu dem Lastmotor oder einer sonstigen Last, sobald der Leistungsfaktor des Lastmotors oder der sonstigen Last wieder einen normalen Bemessungswert angenommen hat, nachdem die eingestellte Zeit verstrichen ist;
(5) dass der Motor und der Generator in Reaktion auf die Betätigung der manuellen Steuervorrichtung (MI101) angetrieben werden, so dass der Generator mit seiner Ausgabe einzig den Lastmotor oder die sonstige Last antreiben kann und dass, wenn die Last an dem Lastmotor zunimmt, die in der Batterie gespeicherte Energie die Last zusammen mit der durch den Generator erzeugten Energie antreiben kann und dass ferner, sobald die Motorlast auf den Normalwert zurückkehrt, die Batterie die Energieabgabe stoppt, zu welcher Zeit die Last stattdessen durch die von dem Generator kommende Energie angetrieben wird;
(6) dass eine Betätigung ausgehend von der manuellen Steuervorrichtung akzeptiert wird, um den Betrieb des Motors und des Generators bei einem festen oder gesteuerten Strom oder bei einer festen Leistungsrate zu initiieren, um die Erzeugung der Leistungsrate zu steuern, um die Last des Motors anzutreiben und die Batterie proportional zu der angepassten Erzeugungsleistungsrate und der Lastrate anzutreiben oder den in beiden Fällen zugeführten Strom anzupassen;
(7) dass eine Betätigung ausgehend von der manuellen Steuervorrichtung akzeptiert wird, um den Betrieb des Motors und des Generators bei einem festen oder gesteuerten Strom oder bei einer festen Leistungsrate zu initiieren, um den Generator und die Batterie zu veranlassen, gemeinsam den Lastmotor oder die andere Last basierend auf der erzeugten Leistung, der Ladeleistung oder des Stroms mit proportionaler Verteilung anzutreiben, den Betrieb auf das Laden der Batterie zurückzusetzen, wenn die Last reduziert wird und die Ladeleistung geringer ist als die Generierungsleistung, und den Antriebsfunktionsmodus wieder aufzunehmen, wenn die Ladeleistung die Generierungsleistungsrate übersteigt;
(8) dass eine Betätigung ausgehend von der manuellen Steuervorrichtung akzeptiert wird, um den Motor- und Generatorbetrieb für das Laden der Batterie selektiv zu initiierten;
(9) dass eine Betätigung ausgehend von der manuellen Steuervorrichtung akzeptiert wird, um den Motor- und Generatorbetrieb für das Laden der Batterie über individuell programmierte Ladezeiten zu initiieren, um die Ladeströme zur Batterie, den Leistungsfaktor zur Batterie zu begrenzen und eine Aussetzung des Ladens durch den Generator auszulösen, wobei die Steuerung der Ladezeit in diesem Zusammenhang eine ergänzende oder Sättigungsladung oder Notladung einschließt;
(10) dass der Betrieb des Motors und des Generators gestoppt wird, wenn die Batterie eine vorgegebene Sättigung erreicht, wie diese im Verlauf des Betriebs unter den vorgenannten Funktionen (1), (8) oder (9) bestimmt wird;
(11) dass das Laden hinsichtlich der Batterie ohne Beeinträchtigung der von dem Generator an den Lastmotor abgegebenen Leistung entweder durch eine Betätigung der manuellen Steuervorrichtung oder durch die zentrale Steuereinheit gestoppt wird, sobald die Batterie einen vorgegebenen, im Verlauf des Betriebs unter den Funktionen (2) oder (6) verifizierten Sättigungspunkt erreicht hat;
(12) dass der Betrieb des Generators derart ist, dass die Leistungsabgabe von der Batterie an den Lastmotor durch eine Betätigung entweder der manuellen Steuervorrichtung oder der zentralen Steuereinheit erfolgt, sobald die Batterie einen vorgegebenen Sättigungspunkt erreicht, der im Verlauf des Betriebs unter den Funktionen (2) oder (6) verifiziert wurde;
(13) dass die Fortsetzung des Betriebs des Generators gleichzeitig mit der Batterie durch ein Umschalten von einem Ladestatus ermöglicht wird, um Eingangsleistung gemeinsam mit dem Generator entweder durch die Betätigung der manuellen Steuervorrichtung oder mittels der zentralen Steuereinheit an den Lastmotor abzugeben, sobald die Batterie einen vorgegebenen Sättigungspunkt erreicht, der im Verlauf des Betriebs unter den Funktionen (2) oder (6) verifiziert wurde;
(14) dass die Leistungsgenerationsrate des Generators basierend auf einem Ladestromsignal geregelt wird, das als Ergebnis der durchgeführten Prüfung erzeugt wird, wenn der Generator während des Betriebs unter den Funktionen (1), (2), (6), (8) oder (9) alleine die Batterie lädt oder gleichzeitig Leistung an den Lastmotor abgibt, während er die Batterie lädt;
(15) dass schädliche Peripherie-Gase durch Prüfen der Konzentration von schädlichen Peripherie-Gasen überwacht werden, so dass der Ladebetrieb und andere Funktionsvorgänge gestoppt werden, sobald ein kritischer Wert überschritten wird, und nur dann erneut gestartet werden, wenn der Ablesewert schädlicher Gase auf eine Höher unterhalb der kritischen Höhe gefallen ist, wobei die Prüfung mittels eines Schadgasdetektors durchgeführt wird, wenn der Ladevorgang unter einem automatischen oder manuellen Getriebe durchgeführt wird oder wenn alternativ andere Funktionsvorgänge in Ablauf sind;
(16) dass die Umgebungstemperatur überwacht wird, wobei die Ausgabe des Umgebungstemperaturdetektors verwendet wird, um den Ladevorgang oder andere Vorgänge zu stoppen, wenn die Temperatur einen vorgegebenen Wert übersteigt, während andere Betriebsmoden innerhalb des normalen Temperaturbereichs zugelassen werden, und dass veranlasst wird, dass der Motor und der Generator automatisch in einen Abschaltstatus umgeschaltet werden, wenn die Temperatur zu stark fällt, um so eine nachhaltige Ladung für die Batterie aufrecht zu erhalten, so dass die Batterie bei sämtlichen Eventualitäten in Bereitschaft gehalten wird.

28. Elektrische Energiequelle nach einem der Ansprüche 1 bis 27, wobei der Generator (G101) für die Bereitstellung einer elektrischen Energie erst nach Ablauf einer vorgegebenen Zeit nach dem Starten des Motors (ICE101) ausgebildet ist.

29. Elektrische Energiequelle nach einem der Ansprüche 1 bis 28, wobei die Anordnung derart ist, dass bei kontinuierlichem Betrieb der Motor (ICE101) in einem Aufwärmzustand gehalten wird, indem der Motor in Vorbereitung auf den Generatorbetrieb im Leerlauf läuft.

30. Elektrische Energiequelle nach einem der Ansprüche 1 bis 29, wobei die Anordnung derart ist, dass, wenn die Anordnung die Energieerzeugung vollständig stoppt, Peripherie-Kühlgeräte die Wärmeableitung fortsetzen,
um eine Anstauung von Motorwärme zu verhindern, und dass nach beendeter Wärmeableitung der Motorbetrieb automatisch gestoppt wird.

31. Elektrische Energiequelle nach einem der Ansprüche 1 bis 30, wobei die Anordnung derart ist, dass während des Betriebs der Motor (ICE101) und der Generator (G101) durch den Umgebungstemperaturdetektor (sud102) gesteuert werden, um die Leistungsabgabe zu reduzieren, wenn die Temperatur einen vorgegebenen Grenzwert übersteigt.

32. Elektrische Energiequelle nach einem der Ansprüche 1 bis 31, wobei der Motor (ICE101) für den diskontinuierlichen Betrieb ausgebildet ist, um eine durch die zentrale Steuereinheit (CCU101) eingestellte Temperatur zu halten.

33. Elektrische Energiequelle nach einem der Ansprüche 1 bis 32, wobei die manuelle Steuervorrichtung (MI101) ausgebildet ist für die Ermöglichung der Programmierung von Ladezeiten, maximalen Ladeströmen und des Ladestrom-Leistungsfaktors.

## Revendications

1. Source d'énergie électrique pour alimenter une charge en énergie électrique, comprenant :
une batterie d'accumulateurs (BAT101) capable d'effectuer des opérations de recyclage de charge/décharge répétées ;
un dispositif de test d'état d'accumulation (BCD101) agencé pour tester une charge, une décharge ou des erreurs de charges statiques pendant les opérations de recyclage de charge/décharge répétées ;
un moteur à combustion interne (ICE101) ;
un moteur de charge (M101) capable d'effectuer une rotation en avant, une rotation en arrière, des fonctions de régulation de vitesse et d'arrêt ;
une génératrice (G101) agencée pour convertir l'énergie provenant du moteur à combustion interne (ICE101) en énergie électrique pour commander le moteur de charge (M101) et/ou pour charger la batterie d'accumulateurs (BAT101) ;
un détecteur de courant (ID100) connecté en série à une borne de sortie de la génératrice ;
un détecteur de courant (ID200) connecté en série à une borne de sortie de la batterie d'accumulateurs (BAT101) ;
une commande excitée par induction (FEC101) agencée pour réguler l'énergie électrique provenant de la génératrice (G101) ;
un servomécanisme d'alimentation en carburant (FC101) agencé pour commander l'alimentation en carburant du moteur à combustion interne, et réguler de ce fait la vitesse de rotation et le couple du moteur à combustion interne ;
un moteur de démarreur (M100) agencé pour générer une énergie de rotation pour démarrer le moteur à combustion interne ;
un contrôleur de commande de moteur de démarreur (CD100) agencé pour commander le moteur de démarreur ;
un contrôleur de commande de moteur de charge (CD101) agencé pour commander le moteur de charge ;
une unité de commande centrale (CCU101) connectée au moteur à combustion interne, à la génératrice, à la batterie d'accumulateurs, au moteur de charge ou à d'autres charges dans le système de commande et agencée pour réagir à des instructions provenant du dispositif de commande manuelle et à des signaux de rétroaction de manière à diriger les interactions entre la génératrice, la batterie d'accumulateurs, le moteur de charge, ou d'autres charges dans le système de commande ;
un détecteur de vitesse de moteur à combustion interne (SPD101) agencé pour convertir le déplacement angulaire du moteur à combustion interne en un signal de vitesse de moteur à combustion interne qui est délivré à l'unité de commande centrale (CCU101), et réguler de ce fait l'alimentation en carburant du moteur à combustion interne par le servomécanisme d'alimentation en carburant ;
un dispositif de commande manuelle (MI101) pour alimenter l'unité de commande centrale de manière à commander le fonctionnement global du système ;
une alimentation auxiliaire (B+) agencée pour alimenter l'unité de commande centrale, le dispositif de commande manuelle et les contrôleurs de commande ;
un détecteur de gaz nocifs (SD101) agencé pour détecter la concentration en gaz nocifs, dans un environnement alentour lorsqu'une charge est en cours, sa sortie étant transmise à l'unité de commande centrale ; et
un détecteur de température ambiante (SD102) agencé pour détecter automatiquement les températures ambiantes, sa sortie étant transmise à l'unité de commande centrale ;
dans laquelle, lorsque le moteur de charge (M101) est commandé par la batterie d'accumulateurs (BAT101) uniquement, l'unité de commande centrale (CCU101) est agencée de sorte que, si la charge appliquée au moteur de charge (M101) augmente de sorte que l'énergie électrique commandant le moteur de charge (M101) dépasse une valeur de seuil et un temps fixé, elle fonctionne pour démarrer le moteur à combustion interne (ICE101) entraînant la génératrice (G101) pour fournir de l'énergie électrique au moteur de charge (M101) conjointement avec la batterie d'accumulateurs (BAT101) ;
**caractérisée en ce que :**
la source d'énergie électrique comprend en outre une commande excitée par induction (FEC101) agencée pour réguler l'énergie électrique provenant de la génératrice (G101) ;
dans laquelle l'unité de commande centrale (CCU101) arrête le fonctionnement du moteur à combustion interne, qu'il soit dans un mode de commande manuelle ou dans un mode d'activation automatique, à chaque fois que la concentration de gaz nocifs détectée dépasse une marge de sécurité, mais celui-ci est autorisé à se poursuivre lorsqu'une lecture provenant du détecteur de gaz nocifs tombe dans une tolérance prédéterminée ;
dans laquelle l'unité de commande centrale (CCU101) suspend la charge, et arrête d'autres formes de fonctionnement, lorsque la température ambiante dépasse une valeur de seuil donnée, et de sorte qu'un fonctionnement continu du système soit autorisé lorsque la température ambiante s'avère être dans une plage de température de travail prédéterminée ; et
dans laquelle, l'unité de commande centrale (CCU101) est en outre agencée de sorte que, si la charge appliquée au moteur de charge (M101) augmente de sorte que l'énergie électrique commandant le moteur de charge (M101) dépasse la valeur de seuil et un temps fixé, elle fonctionne pour démarrer le moteur à combustion interne (ICE101) entraînant la génératrice (G101) pour fournir de l'énergie électrique au moteur de charge et fonctionne pour arrêter le moteur à combustion interne (ICE101) une fois que l'énergie de sortie du moteur de charge (MI101) reprend une valeur assignée normale au-delà d'un temps prédéterminé.

2. Source d'énergie électrique selon la revendication 1, dans laquelle la batterie (BAT101) est une batterie au plomb, au nickel/cadmium, au nickel/azote, au nickel/zinc ou au lithium.

3. Source d'énergie électrique selon la revendication 1 ou la revendication 2, dans laquelle la sortie de la batterie (BAT101) est délivrée au dispositif de test d'état d'accumulation (BCD101) et ensuite à l'unité de commande centrale (CCU101) de manière à commander l'énergie de sortie de la batterie.

4. Source d'énergie électrique selon l'une quelconque des revendications 1 à 3, dans laquelle le dispositif de test d'état d'accumulation (BCD101) est prévu pour effectuer un test continu ou périodique, ou pour convertir la sortie de la batterie en une sortie de signal d'énergie numérique ou analogique à des fins de comparaison pendant une charge ou une décharge.

5. Source d'énergie électrique selon l'une quelconque des revendications 1 à 4, dans laquelle le dispositif de test d'état d'accumulation (BCD101) est un dispositif mécanique ou électronique à semi-conducteur qui forme un circuit de test analogique ou un circuit de test numérique consistant en un microprocesseur et un logiciel associé, des éléments électroniques d'interfaçage, ou une combinaison des deux.

6. Source d'énergie électrique selon l'une quelconque des revendications 1 à 5, dans laquelle la génératrice (G101) comprend un mécanisme à induit ou sans induit pour convertir les rotations de moteur à combustion interne entrantes en énergie alternative ou continue.

7. Source d'énergie électrique selon la revendication 6, comprenant en outre un redresseur (BR101) pour convertir l'énergie alternative en sortie continue pour commander le moteur de charge (M101) et pour charger la batterie (BAT101).

8. Source d'énergie électrique selon la revendication 7, dans laquelle le redresseur (BR101) redresse l'énergie alternative monophasée ou multiphasée en énergie continue.

9. Source d'énergie électrique selon l'une quelconque des revendications 1 à 8, comprenant en outre un régulateur (RG101).

10. Source d'énergie électrique selon la revendication 9, dans laquelle le régulateur (RG101) se réfère à la tension/au courant de sortie de la génératrice (G101), ou reçoit des instructions de l'unité de commande centrale (CCU101), pour renvoyer de ce fait l'énergie de sortie vers la génératrice.

11. Source d'énergie électrique selon la revendication 10, dans laquelle le détecteur de courant (ID100) est connecté entre le régulateur (RG101) et la génératrice (G101), le détecteur de courant produisant des valeurs de test de courant à convertir en signaux analogiques par lesquels un courant de sortie pour la génératrice est produit, pour, de ce fait, commander le régulateur ou délivrer la sortie du détecteur de courant à l'unité de commande centrale (CCU101), de manière à commander à son tour la condition de fonctionnement de la génératrice.

12. Source d'énergie électrique selon l'une quelconque des revendications 1 à 11, dans laquelle la commande excitée par induction (FEC101) est agencée pour commander l'énergie de sortie de la génératrice (G101) sur la base de l'état de sortie de la génératrice et des réglages du dispositif de commande manuelle (MI101) ou de l'unité de commande centrale (CCU101), régulant de ce fait la tension, le courant ou le taux d'énergie de la génératrice.

13. Source d'énergie électrique selon l'une quelconque des revendications 1 à 12, dans laquelle le détecteur de vitesse de moteur à combustion interne (SPD101) est tel que les déplacements angulaires sont convertis en signaux électriques correspondants de manière à délivrer des signaux de vitesse de moteur à combustion interne à l'unité de commande centrale (CCU101), et à réguler en conséquence l'alimentation en carburant du moteur à combustion interne (ICE101) par le servomécanisme d'alimentation en carburant (FC101) .

14. Source d'énergie électrique selon la revendication 13, dans laquelle le détecteur de vitesse de moteur à combustion interne (SPD101) et le servomécanisme (FC101) sont tels qu'ils amènent le moteur à combustion interne (ICE101) à une vitesse de rotation fixée.

15. Source d'énergie électrique selon l'une quelconque des revendications 1 à 14, dans laquelle le moteur à combustion interne (ICE101) est un moteur à combustion interne à mouvement alternatif.

16. Source d'énergie électrique selon l'une quelconque des revendications 1 à 15, dans laquelle le moteur de charge (M101) est un moteur alternatif ou continu synchrone ou asynchrone.

17. Source d'énergie électrique selon l'une quelconque des revendications précédentes, dans laquelle le servomécanisme (FC101) commande la circulation de carburant d'un réservoir de carburant (TK101) vers le moteur à combustion interne (ICE101) .

18. Source d'énergie électrique selon l'une quelconque des revendications 1 à 17, comprenant en outre un circuit de commande comportant une diode de blocage (CR101) connectée à la borne de sortie de la batterie (BAT101).

19. Source d'énergie électrique selon la revendication 18 lorsqu'elle dépend de la revendication 9, dans laquelle la diode (CR101) est mise en parallèle avec le régulateur (RG101), de sorte que, alors que le régulateur est activé pour réguler l'énergie délivrée par la génératrice (G101) à la batterie (BAT101), le régulateur est en outre adapté pour recevoir des signaux de commande de l'unité de commande centrale (CCU101) sur la base du résultat de test d'un détecteur d'accumulation de batterie (BCD101) de manière à permettre la régulation du taux ou des courants de charge et la commande des fonctions de commencement ou d'arrêt de charge.

20. Source d'énergie électrique selon la revendication 18 ou la revendication 19, comprenant en outre une impédance résistive, conductrice ou composite résistive/conductrice (2101) en parallèle aux bornes de la diode de blocage (CR101) pour limiter la charge de courants provenant de la génératrice (G101) vers la batterie (BAT101) .

21. Circuit d'alimentation électrique selon la revendication 18 ou la revendication 19, comprenant en outre un commutateur bidirectionnel (SSW101) en parallèle avec la diode de blocage (CR101) pour permettre la commande d'un circuit ouvert ou d'un circuit fermé aux bornes de sortie à la fois de la batterie (BAT101) et de la génératrice (G101), permettant de ce fait la commande de l'état de charge de la génératrice vers la batterie, et de l'état de sortie de la batterie vers le moteur de charge (M101).

22. Source d'énergie électrique selon l'une quelconque des revendications 1 à 21, dans laquelle l'agencement est tel que, lorsque le système entier cesse de fonctionner, la génératrice (G101) poursuit une opération de dissipation de chaleur, de manière à éviter une accumulation de chaleur dans le moteur à combustion interne (ICE101), et à la fin de l'opération de dissipation de chaleur, la génératrice cesse de fonctionner.

23. Source d'énergie électrique selon l'une quelconque des revendications 1 à 22, dans laquelle l'unité de commande centrale (CCU101) ou le dispositif de commande manuelle (MI101) est tel que, alors que le système est en fonctionnement, la génératrice (G101) est soumise à une commande provenant d'un dispositif de test de température (TS101) situé dans le moteur à combustion interne (ICE101) ou dans la génératrice, de sorte que la rotation du moteur à combustion interne soit arrêtée lorsque la température dépasse un niveau prédéterminé, ou est amenée à fournir une sortie d'énergie moindre.

24. Source d'énergie électrique selon l'une quelconque des revendications 1 à 23, dans laquelle l'unité de commande centrale (CCU101) ou le dispositif de commande manuelle (MI100) est tel que, alors que le système est en fonctionnement, une manipulation du dispositif de commande manuelle ou de l'unité de commande centrale met le moteur à combustion interne (ICE101) dans un état préparatoire, ou le système entre dans une condition de préparation à l'arrêt, et le moteur à combustion interne est commandé pour un fonctionnement intermittent sur la base de la température du moteur à combustion interne qui est prédéterminée dans l'unité de commande centrale de manière à maintenir un lancement d'état préparatoire avantageux pour la température.

25. Source d'énergie électrique selon l'une quelconque des revendications 1 à 24, comprenant en outre des embrayages de transmission unidirectionnels (SWC100, SWC101) agencés de sorte que, lors de l'exécution d'un déplacement au ralenti inertiel dans une direction capable d'entraîner la génératrice (G101), la génératrice puisse appliquer une action de freinage grâce à la génération recyclée tandis que l'embrayage de transmission unidirectionnel (SWC100) fonctionne à vide ; et, lorsque le moteur à combustion interne (ICE101) entraîne la génératrice pour qu'elle fonctionne, l'embrayage de transmission unidirectionnel (SWC101) fonctionne à vide.

26. Source d'énergie électrique selon la revendication 25, dans laquelle chacun des embrayages de transmission unidirectionnels (SWC100, SWC101) est un dispositif d'embrayage entraîné par une force artificielle, mécanique, électrique, hydraulique ou magnétique.

27. Source d'énergie électrique selon l'une quelconque des revendications 1 à 26, dans laquelle l'agencement est tel que :
(1) il charge et lance un fonctionnement du moteur et du moteur à combustion interne, et charge la batterie (BAT101) exclusivement par l'intermédiaire de la génératrice lorsque, en testant l'état de saturation de la batterie, il est confirmé que l'accumulation de la batterie est tombée à un niveau prédéterminé ;
(2) il délivre une énergie au moteur de charge (M101) ou à d'autres charges et à la batterie (BAT101), sur la base du résultat de test du signal d'état de saturation de batterie, et de sa comparaison avec les modes de fonctionnement programmés dans l'unité de commande centrale (CCU101), suivi de la sortie de l'énergie assignée ou assignable, ou d'un courant fixe ou d'un courant commandé, par une commande correspondante de la génératrice de sorte que le facteur de charge soit adapté, ou par l'intermédiaire d'une répartition proportionnelle des courants délivrés à la fois à la charge et à la batterie, et en outre d'une commutation automatique pour effectuer une commande relative de la génératrice lorsque la charge cumulée a dépassé la capacité de la génératrice, tout en retournant dans le régime de fonctionnement originel lorsque le facteur de charge chute à un niveau inférieur à la capacité de la génératrice ;
(3) il effectue une commande relative de la génératrice pour une sortie à courant fixe ou à courant commandé, pour une sortie à facteur d'énergie fixe, ou à facteur d'énergie commandé, sur la base de la condition d'accumulation de courant de la batterie, de manière à répartir les charges, d'une manière contrôlée, vers la génératrice et la batterie sur la base du facteur d'énergie de génératrice et du facteur de charge, ou des deux courants, de sorte que la génératrice et la batterie commandent conjointement le moteur de charge ou d'autres charges, et commute finalement vers la fonction (2) lorsque la charge a diminué avec le facteur de charge diminué à un niveau inférieur au facteur d'énergie de génératrice, mais revienne à sa fonction originelle lorsque la consommation d'énergie de la charge atteint un niveau qui est supérieur à la capacité de la génératrice.
(4) il vérifie l'état de courant de charge du moteur de charge lorsqu'il est commandé par la batterie uniquement, de sorte que, une fois que le facteur d'énergie du moteur de charge ou d'une autre charge s'élève à un niveau supérieur à une valeur de consigne ou au-delà d'un temps fixé, le moteur à combustion interne et la génératrice soient commandés automatiquement, et les modes de fonctionnement programmés dans l'unité de commande centrale agissent pour provoquer un fonctionnement sous un courant fixe ou commandé, ou à un taux d'énergie fixe ou commandé, afin de commander la charge conjointement avec la batterie, le fonctionnement de la génératrice étant également arrêté, suivi de l'application continue de l'énergie de la batterie au moteur de charge ou une autre charge, une fois que le facteur d'énergie du moteur de charge ou d'une autre charge reprend une valeur assignée normale après que le temps fixé s'est écoulé ;
(5) il commande le moteur à combustion interne et entraîne la génératrice en réponse à une manipulation du dispositif de commande manuelle (MI101) de sorte que la génératrice avec sa sortie puisse commander séparément le moteur de charge ou une autre charge, et de sorte que, lorsque la charge appliquée au moteur de charge augmente, l'énergie accumulée dans la batterie puisse conjointement commander la charge avec l'énergie produite par la génératrice, et en outre de sorte que, une fois que la charge de moteur retourne à une valeur normale, la batterie cesse de délivrer de l'énergie, moment auquel la charge est plutôt commandée par l'énergie provenant de la génératrice ;
(6) il accepte une manipulation du dispositif de commande manuelle de manière à lancer un fonctionnement du moteur à combustion interne et de la génératrice à un courant fixe ou commandé, ou à un taux d'énergie fixe, pour commander la génération du taux d'énergie, de manière à commander le moteur de charge et charger la batterie d'une manière proportionnelle au taux d'énergie de génération adapté et au taux de charge, ou pour faire correspondre le courant délivré dans les deux cas ;
(7) il accepte une manipulation du dispositif de commande manuelle de manière à lancer un fonctionnement du moteur à combustion interne et de la génératrice pour la génération de courant fixe, de courant commandé, ou d'un taux d'énergie fixe ou d'un taux d'énergie commandé, de manière à amener la génératrice et la batterie à commander conjointement le moteur de charge ou une autre charge sur la base de l'énergie générée, de l'énergie de charge, ou d'un courant avec une répartition proportionnelle, pour ramener le fonctionnement à la charge de la batterie lorsque la charge est réduite et l'énergie de charge est inférieure à l'énergie de génération, et pour retourner dans son mode de fonctionnement originel lorsque l'énergie de charge dépasse le taux d'énergie de génération ;
(8) il accepte une manipulation du dispositif de commande manuelle de manière à lancer un fonctionnement du moteur à combustion interne et de la génératrice pour charger la batterie de manière sélective ;
(9) il accepte une manipulation du dispositif de commande manuelle de manière à lancer un fonctionnement du moteur à combustion interne et de la génératrice pour charger la batterie pendant des temps de charge programmés individuellement, pour limiter les courants de charge vers la batterie, le facteur d'énergie vers la batterie, et pour déclencher la suspension de la charge par la génératrice, la commande du temps de charge dans ce contexte comprenant une charge supplémentaire ou de saturation, ou une charge d'urgence ;
(10) il arrête le fonctionnement du moteur à combustion interne et de la génératrice alors que la batterie atteint une saturation prédéterminée, telle que déterminée au cours du fonctionnement sous les fonctions (1), (8) ou (9) susmentionnées ;
(11) il arrête la charge en relation avec la batterie sans affecter l'énergie délivrée par la génératrice au moteur de charge soit par l'intermédiaire d'une manipulation du dispositif de commande manuelle, soit par l'unité de commande centrale une fois que la batterie a atteint un point de saturation prédéterminé, vérifié au cours de l'opération effectuée sous les fonctions (2) ou (6) ;
(12) il arrête le fonctionnement de la génératrice de sorte que la sortie d'énergie soit délivrée au moteur de charge à partir de la batterie par l'intermédiaire d'une manipulation soit du dispositif de commande manuelle, soit de l'unité de commande centrale une fois que la batterie à atteint un point de saturation prédéterminé, vérifié au cours des opérations effectuées sous les fonctions (2) ou (6) ;
(13) il permet à la génératrice de continuer de fonctionner simultanément avec la batterie par un décalage par rapport à un état de charge conjointement pour délivrer l'énergie d'entrée par la génératrice au moteur de charge soit par l'intermédiaire d'une manipulation du dispositif de commande manuelle, soit au moyen de l'unité de commande centrale une fois que la batterie a atteint un point de saturation prédéterminé, vérifié au cours des opérations effectuées sous les fonctions (2) ou (6) ;
(14) il régule la fréquence de génération d'énergie de la génératrice sur la base d'un signal de courant de charge généré en tant que résultat d'un test effectué lorsque la génératrice seule charge la batterie ou délivre simultanément de l'énergie au moteur de charge simultanément à la charge de la batterie, pendant des opérations sous les fonctions (1), (2), (6), (8) ou (9) ;
(15) il surveille les gaz nuisibles périphériques en testant la concentration de gaz nuisibles périphériques de sorte que, une fois qu'une valeur critique est dépassée, la charge et d'autres opérations fonctionnelles soient arrêtées, et redémarrées seulement une fois que la lecture des gaz nuisibles a chuté à un niveau au-dessous du niveau critique, le test étant effectué lorsque la charge est effectuée dans le cas d'une transmission automatique ou manuelle, ou alternativement lorsque d'autres opérations fonctionnelles sont en cours, au moyen du détecteur de gaz nocifs ;
(16) il surveille la température ambiante, la sortie du détecteur de température ambiante étant utilisée pour arrêter la charge ou d'autres opérations lorsque la température dépasse une valeur prédéterminée, tout en permettant d'autres modes de fonctionnement dans la plage de température normale, et en provoquant la commutation automatique du moteur à combustion interne et de la génératrice dans un état d'arrêt lorsque la température descend trop bas, de manière à maintenir une charge d'entretien pour la batterie de sorte que la batterie soit maintenue disponible pour toutes les éventualités.

28. Source d'énergie électrique selon l'une quelconque des revendications 1 à 27, dans laquelle la génératrice (G101) est agencée pour délivrer une sortie électrique seulement après qu'un temps prédéterminé s'est écoulé à la suite du démarrage du moteur à combustion interne (ICE101).

29. Source d'énergie électrique selon l'une quelconque des revendications 1 à 28, dans laquelle l'agencement est tel que, lorsqu'il a fonctionné en continu, le moteur à combustion interne (ICE101) est maintenu dans une condition échauffée en faisant fonctionner le moteur à combustion interne à une vitesse de ralenti en préparation d'un fonctionnement de la génératrice.

30. Source d'énergie électrique selon l'une quelconque des revendications 1 à 29, dans laquelle l'agencement est tel que, lorsqu'il arrête la génération d'énergie complètement, les dispositifs de refroidissement périphériques continuent d'effectuer une dissipation de chaleur pour éviter une accumulation de chaleur dans le moteur à combustion interne ; et, à la fin de la dissipation de chaleur, le fonctionnement du moteur à combustion interne est automatiquement arrêté.

31. Source d'énergie électrique selon l'une quelconque des revendications 1 à 30, dans laquelle l'agencement est tel que, en fonctionnement, le moteur à combustion interne (ICE101) et la génératrice (G101) sont commandés par le détecteur de température ambiante (SD102) pour réduire la sortie d'énergie si la température dépasse une limite prédéterminée.

32. Source d'énergie électrique selon l'une quelconque des revendications 1 à 31, dans laquelle le moteur à combustion interne (ICE101) est agencé de manière à fonctionner par intermittence pour maintenir une température fixée par l'unité de commande centrale (CCU101).

33. Source d'énergie électrique selon l'une quelconque des revendications 1 à 32, dans laquelle le dispositif de commande manuelle (MI101) est agencé pour permettre la programmation des temps de charge, des courants de charge maximums et du facteur énergie/courant de charge.
